# FASCICULE DE BREVET EUROPEEN

(11) **EP 3 304 699 B1**
(45) Date de publication et mention de la délivrance du brevet: **08.04.2020**
(21) Numéro de dépôt: 16724087.8
(22) Date de dépôt: 23.05.2016
(51) Int. Cl.: H02K 5/173, H02K 11/22

(54) **MOTEUR ELECTRIQUE A COMMUTATION ELECTRONIQUE ET DISPOSITIF DE PULSION D'AIR CORRESPONDANT**
ELEKTRONISCH KOMMUTIERTER ELEKTROMOTOR UND DAZUGEHÖRIGE LUFTPULSVORRICHTUNG
ELECTRONICALLY SWITCHED ELECTRIC MOTOR AND CORRESPONDING AIR PULSE DEVICE

(30) Priorité: 29.05.2015 FR 1554868
(43) Date de publication de la demande: 11.04.2018
(73) Titulaire: Valeo Systemes Thermiques, 78320 Le Mesnil Saint Denis (FR)
(72) Inventeur: GUIGOU, Pascal, 78322 Le Mesnil Saint-Denis Cedex (FR); CAPOULUN, Geoffroy, 78322 Le Mesnil Saint-Denis Cedex (FR); ROUSSEIL, Xavier, 78322 Le Mesnil Saint-Denis Cedex (FR); FOURNIER, Jonathan, 78322 Le Mesnil Saint-Denis Cedex (FR); LE GOFF, Morgan, 78322 Le Mesnil Saint-Denis Cedex (FR)
(74) Mandataire: Metz, Gaëlle
(86) Numéro de dépôt international: PCT/EP2016/061614
(87) Numéro de publication internationale: WO 2016/193044

(56) Documents cités:
- EP-A2- 2 602 915
- DE-A1-102013 001 339
- FR-A1- 2 679 076
- GB-A- 2 092 834
- JP-A- 2013 188 091

## Description

La présente invention se rapporte au domaine des moteurs électriques, et notamment à celui des moteurs à commutation électronique. Plus spécifiquement, elle concerne des dispositifs de pulsion d'air dans des véhicules automobiles comportant de tels moteurs électriques.

Un dispositif de pulsion d'air équipé d'un moteur électrique selon l'invention est, par exemple, utilisé dans un système de ventilation, de chauffage et/ou de climatisation d'un véhicule automobile.

Les moteurs électriques à commutation électronique, ou moteurs à courant continu sans balai (connu également sous la dénomination anglaise de « brushless »), comportent un ensemble rotor et stator, chacun de ces composants étant porteur d'éléments électromagnétiques dont l'interaction génère le déplacement du rotor relativement au stator. Le rotor et le stator sont montés indépendamment l'un de l'autre dans ledit moteur, et il convient de s'assurer que le positionnement relatif de ces deux composants est correct pour un fonctionnement optimal du moteur. Par ailleurs, la commutation de courant dans les bobines du stator génère des champs électriques qui peuvent perturber le fonctionnement d'autres appareils électroniques disposés à proximité.

La présente invention s'inscrit dans ce contexte et elle vise à proposer un moteur électrique et un dispositif de pulsion d'air associé qui permettent notamment de confiner au moins une partie des rayonnements électromagnétiques générés à l'intérieur du moteur électrique.

Par dispositif de pulsion d'air, on comprend un dispositif permettant d'aspirer et/ou de souffler de l'air.

Le dispositif de pulsion d'air selon l'invention est du type comportant une roue de ventilation entraînée en rotation par un arbre de sortie d'un moteur électrique à commutation électronique, avec le moteur constitué d'au moins un rotor solidaire en rotation de l'arbre de sortie et adapté pour tourner autour d'un stator, qui est monté sur un moyen de support agencé en saillie d'une platine, qui est disposé d'un côté du stator, opposé au côté ou s'étend ledit rotor.

Le stator présente une forme annulaire avec une paroi centrale qui délimite le contour d'un alésage interne par lequel passe ledit arbre de sortie, et il comporte en outre une pluralité de dents agencées radialement en étoile depuis la face externe de ladite paroi centrale et portant chacune une bobine magnétique génératrice d'un champ électromagnétique. Notamment, il est prévu que lesdites dents présentent à leur extrémité distale, à l'opposé de la paroi centrale, des plaques métalliques qui s'étendent sensiblement parallèlement à l'axe de l'arbre de sortie, et chaque plaque métallique est avantageusement agencée de manière à ce qu'une zone de passage pour l'enroulement de la bobine soit formée entre deux plaques métalliques voisines.

Le rotor, agencé autour du stator, est porteur d'au moins un aimant permanent dont l'interaction avec lesdites bobines alimentées en courant génère un mouvement de rotation du rotor autour du stator.

Selon l'invention, il est prévu qu'un écran soit disposé, transversalement à l'arbre de sortie, entre le rotor et le stator, ledit écran étant relié électriquement à la platine qui est connecté électriquement à la masse électrique.

Cet agencement permet la formation d'une enceinte conductrice reliée à la masse électrique, et donc maintenue à un potentiel fixe, de manière à former un blindage apte à confiner à l'intérieur du dispositif de pulsion d'air le champ électrique créé par la commutation de courant dans les bobines du stator génère des champs électriques

Selon une première série de caractéristiques, prises seules ou en combinaison, propres à la connexion électrique du stator sur le moyen support, on pourra prévoir que l'écran est connecté électriquement à la platine par des moyens traversant axialement le stator, notamment dans la paroi centrale de celui-ci, et que
- l'écran s'étend radialement sur tout le diamètre du stator. ;
- l'écran présente une forme annulaire sensiblement plane, percée en son centre d'un alésage pour être traversée par l'arbre de sortie moteur ;
- l'écran est fixé sur le stator, par au moins une vis de fixation apte à coopérer avec un trou formé dans le stator ;
- l'alésage interne du stator présente deux parties distinctes par modification du diamètre interne de la paroi centrale délimitant ledit alésage interne, une première partie de plus grand diamètre s'étendant depuis le bord disposé axialement au voisinage de l'écran jusqu'à un bord d'épaulement délimitant une deuxième partie de plus petit diamètre, ledit trou coopérant avec la vis de fixation étant formé dans le bord d'épaulement ;
- l'écran comporte au moins une patte qui prolonge sensiblement perpendiculairement le bord délimitant l'alésage central de l'écran, et dont l'extrémité libre présente un bord d'appui, de sorte que la patte vienne au contact du bord d'épaulement par ce bord d'appui lorsque l'écran est en position de recouvrement du stator ;
- le bord d'appui est agencé pour laisser passage au corps de vis de fixation dans le trou de fixation et être plaqué contre le bord d'épaulement par la tête de vis ;
- trois trous de fixation sont régulièrement réparties à 120° sur le pourtour de la paroi centrale délimitant l'alésage interne du stator ;
- l'écran est connecté à la masse électrique par l'intermédiaire de ladite au moins une vis de fixation qui s'étend sensiblement parallèlement à l'arbre de sortie moteur, en traversant ledit stator pour venir en prise sur ladite platine ;
- le stator présente au moins un bossage axial disposé en saillie de la face interne de la paroi centrale définissant l'alésage interne dudit stator, ledit bossage étant percé axialement du trou de fixation apte à être traversé par la au moins une vis de fixation ;
- l'écran est réalisé en un matériau électriquement conducteur, par exemple de l'aluminium ;
- l'arbre de sortie dudit moteur est monté à rotation à l'intérieur du fût par l'intermédiaire de roulements ;
- la platine forme un dissipateur thermique porteur d'une carte électronique de commande, notamment de l'alimentation des bobines du stator, la carte électronique de commande étant alors disposée sur la face de la platine orientée à l'opposé du fût.

La présente invention concerne également un système de chauffage, de ventilation et/ou de climatisation d'un véhicule automobile comprenant au moins un dispositif de pulsion d'air conforme à ce qui vient d'être décrit précédemment.

D'autres caractéristiques et avantages de l'invention apparaîtront à la lecture de la description détaillée d'un mode de réalisation qui va suivre et pour la compréhension de laquelle on se reportera aux dessins annexés parmi lesquels :
- la figure 1 est une représentation éclatée en perspective d'un dispositif de pulsion d'air selon l'invention ;
- la figure 2 illustre schématiquement un dispositif de pulsion d'air comportant selon l'invention des moyens de confinement axiaux des rayonnements électromagnétiques ; et
- la figure 3 est une vue en perspective d'un stator et de moyens de confinement axiaux des rayonnements électromagnétiques équipant un moteur électrique dans un dispositif de pulsion d'air selon la figure 2.

Un dispositif de pulsion d'air, qui permet d'aspirer et de souffler de l'air, 1 comporte au moins un moteur électrique à commutation électronique 2, apte à entraîner en rotation une roue de ventilation 4, de type ici à ailettes 6, par l'intermédiaire d'un arbre de sortie 8 du moteur électrique. Le dispositif comporte en outre au moins un moyen de support 10 du moteur électrique 2, et une platine 12 sur laquelle est fixé ledit moyen de support 10 et une carte électronique de commande 13 dudit moteur électrique 2, et qui forme un moyen de refroidissement des composants dudit dispositif.

Le moteur électrique 2 comporte principalement un stator 14 et un rotor 16, porteur de l'arbre de sortie 8 apte à entraîner la roue de ventilation 4. Le stator 14 est rendu solidaire du moyen de support 10, et le rotor 16 est agencé autour du stator 14 pour être entraîné en rotation sous l'effet des champs magnétiques générés par le bobinage et les aimants associés au rotor et au stator.

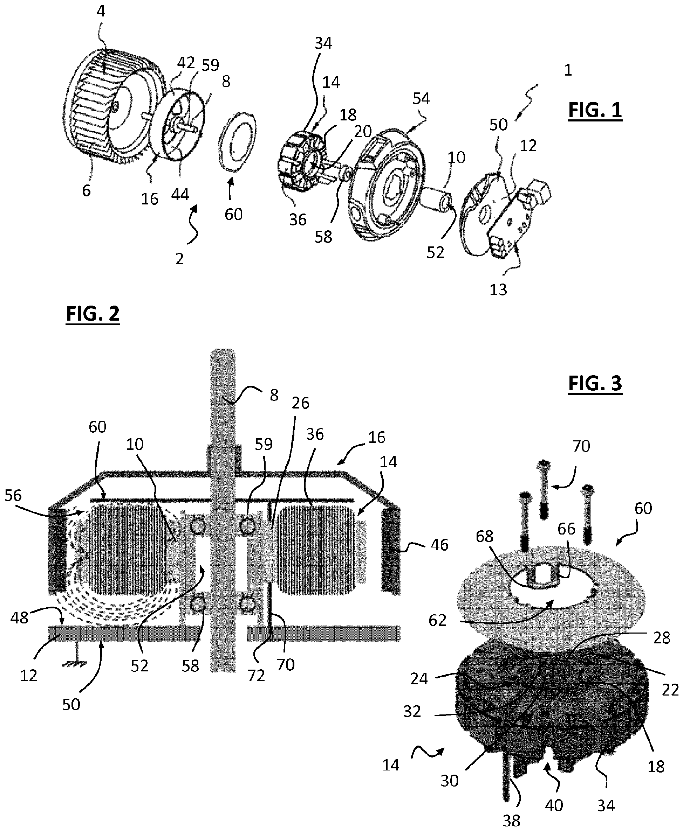

Tel que cela est visible sur la figure 3, le stator 14 présente une forme annulaire avec une paroi centrale 18 qui délimite le contour d'un alésage interne 20. La paroi centrale 18 présente une face interne 22 tournée vers l'alésage interne 20 et une face externe 24 prolongée par une pluralité de dents 26 agencées radialement en étoile.

L'alésage interne 20 du stator 14 présente des parties distinctes par modification du diamètre interne de la paroi centrale 18 délimitant ledit alésage interne 20, des parties de plus grand diamètre s'étendant depuis les bords d'extrémités axiales de la paroi centrale jusqu'à un bord d'épaulement 28 délimitant une partie centrale de l'alésage interne 20 de plus petit diamètre. Dans cette partie centrale, le stator 14 présente au moins un bossage axial 30 disposé en saillie de la face interne, ledit bossage étant percé axialement d'un trou de fixation 32 tel qu'il sera décrit ci-après.

Les dents 26 sont formées par une paroi droite, dont une extrémité radiale proximale est solidaire de la paroi centrale 18 du stator 14 et dont une extrémité radiale distale libre est prolongée par une plaque 34 qui s'étend sur toute la hauteur du stator 14 et qui est plus large que la paroi droite, afin de former paroi de butée pour le bobinage amené à être entouré autour de la paroi droite des dents 26. Chaque plaque 34 est recouverte à l'opposé de la paroi droite par une superposition de différentes couches de tôle, collées les unes sur les autres.

Le stator 14 comporte un bobinage d'excitation composé de plusieurs phases, comportant chacune au moins un enroulement de fil 36, dont les sorties sont raccordées électriquement à des moyens d'alimentation ici non représentés (seuls les moyens de raccordement 38 étant visibles sur la figure 3).

Dans un mode de réalisation particulier, le stator comporte douze dents bobinées en triphasé. L'enroulement de fil est réalisé autour des dents, chaque dent portant un élément de bobinage. Et tel qu'illustré, les plaques 34 portées à l'extrémité des dents et les couches métalliques qui y sont collées sont dimensionnées pour prévoir une zone de passage 40 entre elles apte à laisser la place nécessaire pour réaliser l'enroulement du fil autour des dents.

Le rotor 16 présente une forme de cloche, avec une couronne annulaire 42 et une paroi de fermeture 44 disposée à une extrémité de ladite couronne. La paroi de fermeture peut prendre une forme plane sensiblement perpendiculaire à l'axe de la couronne ou bien une forme incurvée en dégagement de la couronne, et elle porte en son centre l'arbre de sortie moteur 8.

La couronne 42 présente un diamètre supérieur au diamètre extérieur du stator, de sorte que le rotor peut venir en recouvrement du stator. La couronne présente une face interne qui est tournée vers le stator dans cette position de recouvrement, et au moins un aimant permanent 46 est disposé sur cette face interne de la couronne du rotor.

Lorsque le moteur est assemblé, le stator 14 est disposé dans le corps du rotor 16 délimité par la couronne 42. Le rotor et le stator sont ainsi agencés pour que l'aimant permanent 46 porté par le rotor 16 soit constamment disposé dans le champ magnétique généré par les bobines du stator 14 lorsque celles-ci sont alimentées en courant, de manière à générer un mouvement de rotation du rotor autour du stator.

Dans le dispositif de pulsion d'air 1 comportant le moteur électrique 2 selon l'invention, le stator 14 et le rotor 16 sont agencés de sorte que la paroi de fermeture 44 du rotor est tournée vers la roue de ventilation 4 et que le stator 14 est disposé en regard de la platine 12.

Le moyen de support 10 est fixé sur une première face 48 de la platine 12, tandis que la carte électronique 13 est fixée sur une deuxième face 50 opposée de cette platine. On comprend que de la sorte, lorsque les composants du dispositif sont montés, la carte électronique est tournée à l'opposé du moteur électrique. La platine est fixée mécaniquement par rapport à la structure du véhicule, ici par l'intermédiaire d'un bâti 54 illustré sur la figure 1, et elle est connectée électriquement à la masse de l'organe électronique. La platine 12 présente sur la figure 1 une forme discoïdale mais on comprend que celui-ci peut prendre d'autres formes, par exemple rectangulaire, carrée, elliptique, etc.

La platine 12 s'étend dans un plan sensiblement perpendiculaire à l'axe de révolution du canal interne du moyen de support 10. Le moyen de support, sensiblement cylindrique, présente un canal interne 52 débouchant sensiblement au centre de la platine. Sur la figure 2, on comprend que le moyen de support est apte à être logé dans l'alésage interne 20 du stator 14 et à recevoir l'arbre de sortie moteur 8 solidaire du rotor 16, de sorte que ce moyen de support 10 assure le positionnement correct du rotor 16 par rapport au stator 14. Le moyen de support peut être fixé sur la platine par différents moyens et notamment des moyens de soudage.

De façon préférentielle, la platine 12 est en métal. Ainsi, la platine faisant office de dissipateur thermique peut refroidir efficacement l'organe électronique par conduction thermique. De plus, le fait que la platine soit réalisée en des matériaux de forte conductivité électrique et qu'elle soit reliée à la masse de l'organe électronique, permet de bloquer des rayonnements électromagnétiques émis par l'organe électronique, ces rayonnements pouvant perturber le fonctionnement du moteur électrique. Préférentiellement, la platine est en aluminium, de telle sorte que l'on associe pour ces pièces des caractéristiques de légèreté et de bonne conduction thermique.

Tel que cela est notamment visible sur la figure 2, le stator 14 est fixé sur le moyen de support 10 et le rotor 16 est agencé pour tourner autour du stator 14. Notamment, le stator est disposé autour du moyen de support, en étant au contact de la face externe du fût que forme ledit moyen de support 10, tandis que le rotor 16 est reçu, par l'intermédiaire de l'arbre de sortie 8 dont il est solidaire, dans le canal interne 52 du moyen de support 10. L'alimentation électrique des fils de bobine crée des champs magnétiques 56, illustrés à titre d'exemple pour un enroulement autour d'une dent sur la figure 2, qui force la rotation du rotor entraîné sous l'effet de l'aimant permanent 46 qu'il porte. Il en résulte un entraînement de l'arbre de sortie 8 du moteur qui tel qu'illustré est porté par le rotor 16 et qui est monté à rotation à l'intérieur du canal interne 52 du moyen de support 10 par l'intermédiaire de roulements.

Deux roulements 58, 59 sont insérés dans le canal interne 52 du moyen de support 10 pour servir de guide de rotation à l'arbre de sortie 8 du moteur entraîné par ailleurs en rotation par le rotor 16. Ces roulements peuvent être des roulements à billes, tel qu'illustré schématiquement, mais on comprendra qu'ils pourraient prendre la forme de roulements à rouleaux, à aiguilles, ou autres...

La roue de ventilation 4 du dispositif de pulsion d'air 1 est rendu solidaire de l'extrémité libre de l'arbre de sortie 8 du moteur qui s'étend à l'opposé du stator 14 et de la platine 12, et elle comporte, disposées à sa périphérie, une pluralité d'ailettes 6. La rotation du rotor entraîne en rotation la roue qui contribue à produire de l'air pulsé par l'intermédiaire des ailettes.

Il est particulièrement notable selon l'invention que le moteur électrique 2 formé par le rotor 16 et le stator 14 comporte en outre des moyens de confinement pour éviter la propagation des rayonnements électromagnétiques à l'extérieur du moteur et du dispositif de pulsion d'air.

Notamment le moteur comporte des moyens de confinement axiaux, c'est-à-dire des moyens permettant d'éviter la propagation selon l'axe de l'arbre de sortie du moteur de ces rayonnements électromagnétiques.

On va maintenant décrire un mode de réalisation particulier en ce que les moyens de confinement axiaux consistent en la présence d'un écran additionnel disposé entre le rotor et le stator, cet écran étant réalisé dans un matériau à forte conductivité, notamment en aluminium, et relié électriquement à la masse.

Sur la figure 2, le moteur 2 comporte un écran 60, disposé transversalement à l'arbre de sortie 8, entre le stator 14 et le rotor 16, pour former moyen de confinement axial des rayonnements électromagnétiques. Afin de former un moyen de confinement efficace, l'écran 60 s'étend transversalement sur tout le diamètre du stator.

Tel qu'illustré sur la figure 3, on peut prévoir que l'écran 60 présente une forme annulaire sensiblement plane, percée en son centre d'un alésage 62 pour être traversé par l'arbre de sortie du moteur qui s'étend entre le rotor et le stator.

L'écran 60 est fixé sur le stator 14 sensiblement au centre de l'écran. Et les moyens de fixation prévus, par vissage, permettent en outre la mise à la masse de cet écran 60. A cet effet, l'écran 60 comporte au moins une patte 66 qui prolonge sensiblement perpendiculairement le bord délimitant l'alésage central 62 de l'écran. L'extrémité libre de cette patte présente un bord d'appui 68 plié perpendiculairement au reste de la patte, pour venir au contact du stator, et plus particulièrement du bord d'épaulement 28 de l'alésage interne 20 du stator 14, lorsque l'écran 60 est en position de recouvrement de ce stator 14. L'écran est agencé angulairement pour que le bord d'appui 68 de cette patte soit agencé autour d'un trou de fixation 32 réalisé dans l'épaisseur du stator.

Le bord d'appui 68 est agencé pour laisser passage au corps d'une vis de fixation 70, qui s'étend sensiblement parallèlement à l'arbre de sortie moteur, pour l'insertion de cette vis dans le trou de fixation 32 correspondant, et pour être plaqué contre le bord d'épaulement 28 par la tête de vis.

Tel qu'illustré, l'écran 60 comporte trois pattes de fixation 66, régulièrement réparties à 120° sur le pourtour de l'alésage central de l'écran, et il est prévu autant de trous de fixation 32 pour que l'écran soit plaqué contre le stator par trois vis de fixation 70.

Avantageusement, il est prévu d'utiliser les vis de fixation 70 pour la mise à la masse de l'écran 60, cette mise à la masse étant nécessaire pour que l'écran forme partie d'un blindage de champs électriques apte à confiner les rayonnements électromagnétiques.

Tel qu'illustré schématiquement sur la figure 2, l'écran 60 est mis à la masse par l'intermédiaire d'au moins une des vis de fixation 70, qui traverse à cet effet le stator 14 pour venir en prise de l'autre côté du stator, sur la platine 12. Cette vis de fixation 70 traverse un trou de fixation lisse réalisé à travers le stator 14 et elle vient en prise dans un trou taraudé 72 réalisé dans le corps de masse. On comprend que chacune des trois vis de fixation peut présenter un tel agencement, ou bien que seule une des vis de fixation 70 traverse le stator 14 pour venir en prise sur la platine 12, les deux autres vis de fixation étant plus courtes de manière à coopérer avec un trou de fixation 32 taraudé dans le corps du stator. La connexion électrique de l'écran et sa mise à la masse se fait par l'intermédiaire de la platine 12 métallique, de la au moins une vis de fixation métallique 70 en prise dans la platine, et du contact entre la patte 66 de l'écran et la tête de vis.

La description qui précède vise à expliquer comment l'invention permet d'atteindre les objectifs qu'elle s'est fixés et notamment de proposer un dispositif de pulsion d'air qui confine les rayonnements électromagnétiques, par l'élaboration de moyens de confinement simples à fabriquer, simples à monter et particulièrement efficaces. Toutefois, l'invention n'est pas limitée aux seuls dispositifs de pulsion d'air conformes aux modes de réalisation explicitement décrits en regard des figures 1 à 3, étant entendu que des variantes de réalisation pourraient être mises en place sans sortir de la portée des revendications, dès lors qu'un confinement axial des rayonnements électromagnétiques est rendu possible par la mise à la masse d'un écran métallique disposé entre le rotor et le stator d'un moteur électrique, notamment à commutation électronique.

## Revendications

1. Dispositif de pulsion d'air comportant un moteur électrique (2) à commutation électronique, ledit moteur comportant un rotor (16) et un stator (14), le rotor (16) est agencé pour tourner autour du stator (14), ledit stator (14) étant monté sur un moyen de support (10) agencé en saillie d'une platine (12),
dans lequel un écran (60) est disposé, transversalement à l'arbre de sortie, entre le stator (16) et le rotor (14), ledit écran (60) étant relié électriquement à la platine (12) qui est connectée électriquement à une masse électrique,
**caractérisé en ce que** l'écran (60) est connecté électriquement à la platine (12) par des moyens traversant axialement le stator (14).

2. Dispositif de pulsion d'air selon la revendication 1, **caractérisé en ce que** ladite platine (12) est disposée d'un côté du stator (14) opposé au côté dudit rotor (16).

3. Dispositif de pulsion d'air selon l'une des revendications précédentes, **caractérisé en ce que** ledit écran (60) s'étend radialement sur tout le diamètre du stator (14).

4. Dispositif de pulsion d'air selon l'une des revendications précédentes, **caractérisé en ce que** ledit écran (60) présente une forme annulaire sensiblement plane.

5. Dispositif de pulsion d'air selon l'une des revendications précédentes, **caractérisé en ce que** l'écran est percé en son centre d'un alésage (62) pour être traversée par un arbre de sortie (8) du moteur.

6. Dispositif de pulsion d'air selon la revendication 5, **caractérisé en ce que** ledit stator (14) présente une forme annulaire avec une paroi centrale (18) qui délimite le contour d'un alésage interne (20) par lequel passe ledit arbre de sortie (8).

7. Dispositif de pulsion d'air selon la revendication précédente, **caractérisé en ce que** ledit stator comporte en outre une pluralité de dents (26) agencées radialement en étoile depuis la face externe (24) de ladite paroi centrale (18) et portant chacune une bobine magnétique génératrice d'un champ électromagnétique,

8. Dispositif de pulsion d'air selon l'une des revendications précédentes, **caractérisé en ce que** ledit écran (60) est fixé sur le stator (14), par au moins une vis de fixation (70) apte à coopérer avec un trou (32) formé dans le stator.

9. Dispositif de pulsion d'air selon les revendications 6 et 8, **caractérisé en ce que** l'alésage interne (20) du stator (14) présente deux parties distinctes par modification du diamètre interne de la paroi centrale (18) délimitant ledit alésage interne, une première partie de plus grand diamètre s'étendant depuis le bord disposé axialement au voisinage de l'écran jusqu'à un bord d'épaulement (28) délimitant une deuxième partie de plus petit diamètre, ledit trou (32) coopérant avec la vis de fixation (70) étant formé dans le bord d'épaulement.

10. Dispositif de pulsion d'air selon la revendication précédente, **caractérisé en ce que** l'écran (60) comporte au moins une patte (66) qui prolonge sensiblement perpendiculairement le bord délimitant l'alésage central (62) de l'écran, et dont l'extrémité libre présente un bord d'appui (68), de sorte que la patte vienne au contact du bord d'épaulement (28) par ce bord d'appui lorsque l'écran est en position de recouvrement du stator (14).

11. Dispositif de pulsion d'air selon la revendication précédente, **caractérisé en ce que** le bord d'appui (68) est agencé pour laisser passage au corps de la vis de fixation (70) dans le trou de fixation (32) et être plaqué contre le bord d'épaulement (28) par la tête de vis.

12. Dispositif de pulsion d'air selon l'une des revendications 8 à 11, **caractérisé en ce que** l'écran (60) est connecté à la masse électrique par l'intermédiaire de ladite au moins une vis de fixation (70) qui s'étend en traversant ledit stator (14) pour venir en prise sur ladite platine (12).

13. Dispositif de pulsion d'air selon l'une des revendications précédentes, **caractérisé en ce que** l'écran (60) est réalisé en un matériau électriquement conducteur.

14. Système de chauffage, de ventilation et/ou de climatisation d'un véhicule automobile comprenant au moins un dispositif de pulsion d'air (1) conforme à l'une quelconque des revendications précédentes.

## Patentansprüche

1. Zu- und Abluftvorrichtung, die einen Elektromotor (2) mit elektronischer Kommutierung enthält, wobei der Motor einen Rotor (16) und einen Stator (14) aufweist, wobei der Rotor (16) angeordnet ist, um um den Stator (14) zu drehen, wobei der Stator (14) auf eine Stützeinrichtung (10) montiert ist, die von einer Platte (12) vorstehend angeordnet ist, wobei eine Abschirmung (60) quer zur Abtriebswelle zwischen dem Stator (16) und dem Rotor (14) angeordnet ist, wobei die Abschirmung (60) elektrisch mit der Platte (12) verbunden ist, die elektrisch an eine elektrische Masse angeschlossen ist,
**dadurch gekennzeichnet, dass** die Abschirmung (60) durch den Stator (14) axial durchquerende Einrichtungen elektrisch an die Platte (12) angeschlossen ist.

2. Zu- und Abluftvorrichtung nach Anspruch 1, **dadurch gekennzeichnet, dass** die Platte (12) auf einer Seite des Stators (14) entgegengesetzt zur Seite des Rotors (16) angeordnet ist.

3. Zu- und Abluftvorrichtung nach einem der vorhergehenden Ansprüche, **dadurch gekennzeichnet, dass** die Abschirmung (60) sich radial über den ganzen Durchmesser des Stators (14) erstreckt.

4. Zu- und Abluftvorrichtung nach einem der vorhergehenden Ansprüche, **dadurch gekennzeichnet, dass** die Abschirmung (60) eine im Wesentlichen ebene Ringform aufweist.

5. Zu- und Abluftvorrichtung nach einem der vorhergehenden Ansprüche, **dadurch gekennzeichnet, dass** die Abschirmung in ihrer Mitte eine Bohrung (62) aufweist, um von einer Abtriebswelle (8) des Motors durchquert zu werden.

6. Zu- und Abluftvorrichtung nach Anspruch 5, **dadurch gekennzeichnet, dass** der Stator (14) eine Ringform mit einer Mittelwand (18) aufweist, die den Umriss einer Innenbohrung (20) begrenzt, durch die die Abtriebswelle (8) verläuft.

7. Zu- und Abluftvorrichtung nach dem vorhergehenden Anspruch, **dadurch gekennzeichnet, dass** der Stator außerdem eine Vielzahl von Zähnen (26) aufweist, die radial sternförmig von der Außenseite (24) der Mittelwand (18) angeordnet sind und je eine ein elektromagnetisches Feld erzeugende Magnetspule tragen.

8. Zu- und Abluftvorrichtung nach einem der vorhergehenden Ansprüche, **dadurch gekennzeichnet, dass** die Abschirmung (60) am Stator (14) durch mindestens eine Befestigungsschraube (70) befestigt ist, die mit einem im Stator ausgebildeten Loch (32) zusammenwirken kann.

9. Zu- und Abluftvorrichtung nach den Ansprüchen 6 und 8, **dadurch gekennzeichnet, dass** die Innenbohrung (20) des Stators (14) zwei durch Änderung des Innendurchmessers der die Innenbohrung begrenzenden Mittelwand (18) unterschiedliche Bereiche aufweist, wobei ein erster Bereich größeren Durchmessers sich von dem Rand, der axial in der Nähe der Abschirmung angeordnet ist, bis zu einem Schulterrand (28) erstreckt, der einen zweiten Bereich kleineren Durchmessers begrenzt, wobei das mit der Befestigungsschraube (70) zusammenwirkende Loch (32) im Schulterrand geformt ist.

10. Zu- und Abluftvorrichtung nach dem vorhergehenden Anspruch, **dadurch gekennzeichnet, dass** die Abschirmung (60) mindestens eine Lasche (66) aufweist, die den die zentrale Bohrung (62) der Abschirmung begrenzenden Rand im Wesentlichen lotrecht verlängert, und deren freies Ende einen Auflagerand (68) aufweist, so dass die Lasche durch diesen Auflagerand mit dem Schulterrand (28) in Kontakt kommt, wenn die Abschirmung in der Abdeckungsstellung des Stators (14) ist.

11. Zu- und Abluftvorrichtung nach dem vorhergehenden Anspruch, **dadurch gekennzeichnet, dass** der Auflagerand (68) eingerichtet ist, um einen Durchlass für den Körper der Befestigungsschraube (70) in das Befestigungsloch (32) freizulassen und durch den Schraubenkopf gegen den Schulterrand (28) gedrückt zu werden.

12. Zu- und Abluftvorrichtung nach einem der Ansprüche 8 bis 11, **dadurch gekennzeichnet, dass** die Abschirmung (60) mittels der mindestens einen Befestigungsschraube (70) mit der elektrischen Masse verbunden ist, die sich erstreckt, indem sie den Stator (14) durchquert, um auf der Platte (12) in Eingriff zu kommen.

13. Zu- und Abluftvorrichtung nach einem der vorhergehenden Ansprüche, **dadurch gekennzeichnet, dass** die Abschirmung (60) aus einem elektrisch leitenden Material hergestellt ist.

14. Heizungs-, Lüftungs- und/oder Klimatisierungssystem eines Kraftfahrzeugs, das mindestens eine Zu- und Abluftvorrichtung (1) nach einem der vorhergehenden Ansprüche enthält.

## Claims

1. Air pulsing device comprising an electronically switched electric motor (2), said motor comprising a rotor (16) and a stator (14), the rotor (16) being arranged to rotate about the stator (14), said stator (14) being mounted on a support means (10) arranged protruding from a plate (12),
in which a shield (60) is positioned, transversely to the output shaft, between the stator (16) and the rotor (14), said shield (60) being linked electrically to the plate (12) which is connected electrically to an electrical ground, **characterized in that** the shield (60) is connected electrically to the plate (12) by means passing axially through the stator (14).

2. Air pulsing device according to Claim 1, **characterized in that** said plate (12) is positioned on a side of the stator (14) opposite the side of said rotor (16) .

3. Air pulsing device according to either of the preceding claims, **characterized in that** said shield (60) extends radially over all the diameter of the stator (14) .

4. Air pulsing device according to one of the preceding claims, **characterized in that** said shield (60) has a substantially flat annular form.

5. Air pulsing device according to one of the preceding claims, **characterized in that** the shield is pierced at its center by a bore (62) to be passed through by an output shaft (8) of the motor.

6. Air pulsing device according to Claim 5, **characterized in that** said stator (14) has an annular form with a central wall (18) which delimits the outline of an internal bore (20) through which passes said output shaft (8).

7. Air pulsing device according to the preceding claim, **characterized in that** said stator also comprises a plurality of teeth (26) arranged radially in star configuration from the external face (24) of said central wall (18) and each bearing a magnetic coil generating an electromagnetic field.

8. Air pulsing device according to one of the preceding claims, **characterized in that** said shield (60) is fixed onto the stator (14), by at least one fixing screw (70) capable of cooperating with a hole (32) formed in the stator.

9. Air pulsing device according to Claims 6 and 8, **characterized in that** the internal bore (20) of the stator (14) has two distinct parts through modification of the internal diameter of the central wall (18) delimiting said internal bore, a first part of larger diameter extending from the edge positioned axially in the vicinity of the shield to a shoulder edge (28) delimiting a second part of smaller diameter, said hole (32) cooperating with the fixing screw (70) being formed in the shoulder edge.

10. Air pulsing device according to the preceding claim, **characterized in that** the shield (60) comprises at least one tab (66) which prolongs, substantially at right angles, the edge delimiting the central bore (62) of the shield, and whose free end has a bearing edge (68), such that the tab comes into contact with the shoulder edge (28) by this bearing edge when the shield is in the position covering the stator (14).

11. Air pulsing device according to the preceding claim, **characterized in that** the bearing edge (68) is arranged to allow the passage of the body of the fixing screw (70) into the fixing hole (32) and be pressed against the shoulder edge (28) by the screw head.

12. Air pulsing device according to one of Claims 8 to 11, **characterized in that** the shield (60) is connected to the electrical ground via said at least one fixing screw (70) which extends by passing through said stator (14) to engage on said plate (12).

13. Air pulsing device according to one of the preceding claims, **characterized in that** the shield (60) is produced in an electrically conductive material.

14. Heating, ventilation and/or air conditioning system of a motor vehicle comprising at least one air pulsing device (1) according to any one of the preceding claims.
